# EUROPEAN PATENT SPECIFICATION

(11) **EP 1 532 502 B1**
(45) Date of publication and mention of the grant of the patent: **16.08.2006**
(21) Application number: 03738834.5
(22) Date of filing: 24.06.2003
(51) Int. Cl.: G05G 5/28, B66C 13/56, B66C 13/18

(54) **MANEUVER BOX FOR CONTROL OF POWER ACTUATOR**
MANÖVRIERBOX ZUR STEUERUNG EINES LEISTUNGSSTELLGLIEDS
BOITIER DE MANOEUVRE POUR LA COMMANDE D'UN ACTIONNEUR

(30) Priority: 02.07.2002 SE 0202047
(43) Date of publication of application: 25.05.2005
(73) Proprietor: Parker Hannifin Aktiebolag, 501 78 Boras (SE)
(72) Inventor: ANDERSSON, Lars, Roger, Leif, S-521 96 Falköping (SE)
(74) Representative: Pantzar, Tord
(86) International application number: PCT/SE2003/001086
(87) International publication number: WO 2004/006040

(56) References cited:
- WO-A1-95/16630
- WO-A1-96/24551
- WO-A1-96/24892
- US-A- 6 050 431

## Description

The invention relates to a maneuver box which comprises one or more control devices communicating with at least one remotely located power actuator, a base unit rigidly secured to a larger structure and supporting rigidly the control device or devices, and a lid pivotally hinged on the base unit and movable between an open position and a closed position in which it covers and protects the control device or devices, whereby handles are provided for shifting each control device between two or more operating positions, one of which is a safety position.

A problem concerned with maneuver boxes of the above type (see e.g. US-A-6050431) is that the operator may forget to shift the control devices to their safety positions and still be able to close the box lid believing all operations being properly finished and the actuator being put in a safe rest position. This may result in unintentional hazardous situations with material damages and personal injuries.

The main object of the invention is to provide an improved maneuver box which not only provides a good protection for the control devices, which is important in rough environments such as underneath a truck chassis, but enhances safety by ensuring that the control devices are put in their safety positions before the protective box lid can be closed.

Further characteristic features and advantages of the invention will appear from the following specification and claims.

A preferred embodiment of the invention is below described in detail with reference to the accompanying drawings wherein
Fig. 1 shows a maneuver box according to the invention used in a truck/trailer coupling application.
Fig. 2 shows a side view of a maneuver box according to one embodiment of the invention having the protective lid in an open position.
Fig. 3a shows a vertical view of the maneuver box in Fig. 2 illustrating the control valve handle in an unfolded position, and the control valve occupies a closed safety position.
Fig. 3b shows a view similar to Fig. 3a but illustrating the control valve in an open active position.
Fig. 3c shows a view similar to Fig. 3a but illustrating the control valve in a closed safety position, and the handle occupies a folded position.
Fig. 4 shows the foldable handle of the control valve in its unfolded position.
Fig. 5 shows the foldable handle of the control valve in its folded position.
Fig. 6 shows a side view of a maneuver box according to a second embodiment of the invention having the protective lid in an open position.
Fig. 7 shows a vertical view of the maneuver box in Fig. 6 illustrating the shut-off valve in an open position, which in this embodiment is the safety position, and the control valve is in its inactive position.

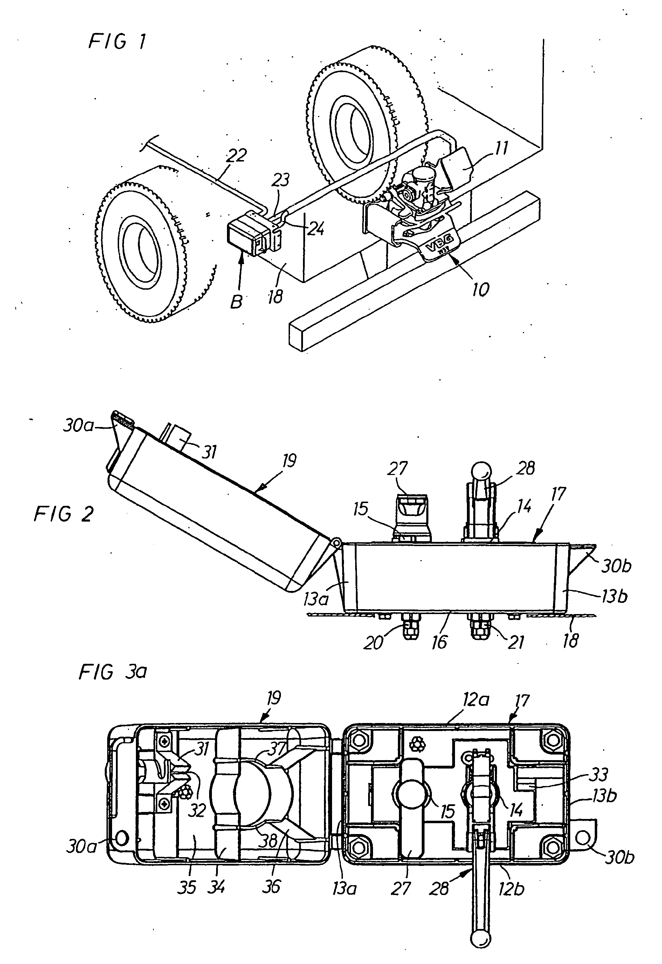

In Fig. 1 there is illustrated the rear end of a truck provided with a mechanised coupling 10 for connection of the tow bar of a trailer (not shown). The coupling 10 is provided with a remotely controlled pneumatic actuator 11 for operating the lock bolt of the coupling, between a tow bar locking position and a tow bar releasing position. As a standard feature of this type couplings, the lock bolt is retained in its tow bar releasing position by a latch mechanism which is arranged to be tripped by the tow bar as the latter is properly inserted into the coupling. In one type of couplings, the lock bolt is maintained in closed position by a continuously acting air pressure, and in another type the lock bolt is maintained in closed position by a second latch mechanism. The operation order of the coupling will be described briefly below.

Since the coupling is a standard type coupling and does not form any part of this invention it is not described in further detail. Its functional features, however, are described in brief in connection with the maneuver box according to the invention.

The pneumatic actuator 11 is operated by a control valve 14 and a shut-off valve 15 which are both mounted in a maneuver box B disposed at a distance from the actuator 11. The maneuver box B comprises a base unit 17 which via a bottom section 16 is secured to a part 18 of the frame work of the truck. The base unit 17 comprises two side walls 12a,b and two end walls 13a,b, and a protective lid 19 is hinged at one of the end walls 13a for movement between a closed position and an open position. Through the bottom section 16 there extend connection nipples 20,21 for connection of pressure air conduits 22,23,24 communicating with a pressure air line (not shown) on the truck and with the actuator 11, respectively.

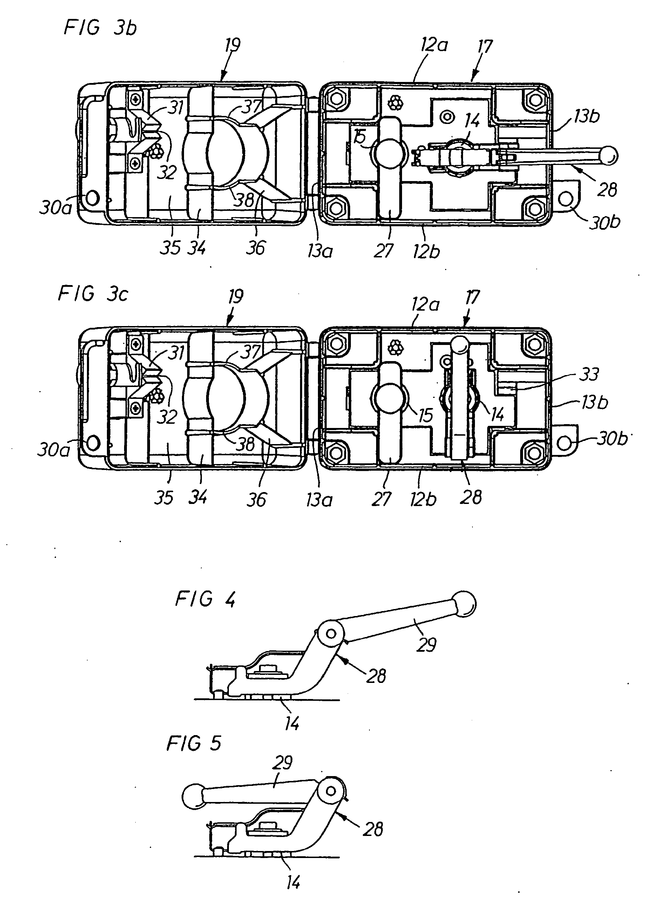

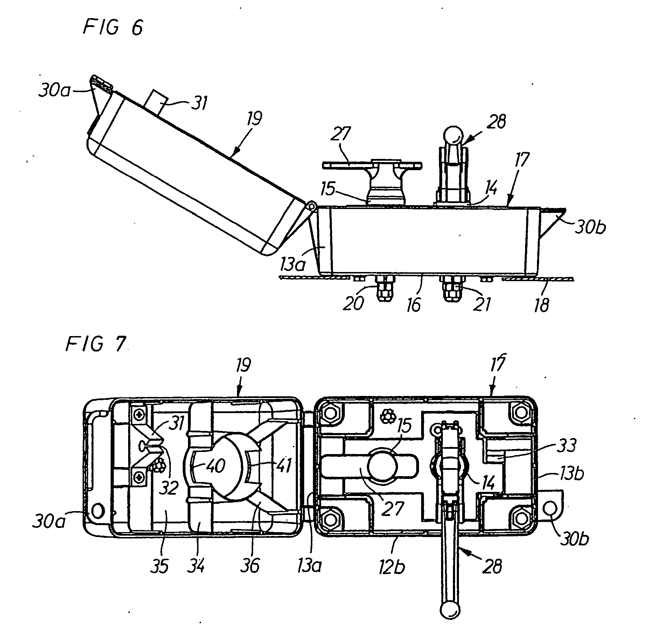

The shut-off valve 15 is arranged to open or shut the pressure air supply to the control valve 14 and also to depressurise the actuator 11 in its closed position. The shut-off valve 14 is provided with a short handle 27 which is shiftable over 90 degrees between a closed position as shown in Figs. 2,3a,3b,3c and an open position as shown in Figs. 6,7. The control valve 14 is arranged to feed pressure air to either sides of the actuator 11 to accomplish lifting and lowering, respectively, of the lock bolt of the coupling 10. In order to facilitate its operation, the control valve 15 is provided a foldable handle 28 including a pivotal lever 29. See Figs. 4,5.

For operating the coupling the shut-off valve 15 is put in its open position to deliver pressure air to the control valve 14. When arranging the coupling for receiving a trailer tow bar the control valve 14 is shifted to a first position, see Fig. 3b, to supply pressure air to one end of the actuator 11, thereby accomplishing lifting of the lock bolt to an open position. Now, the lock bolt is retained by the latch mechanism in its open position. When shifted to its second position, see Fig. 3a, the control valve 11 supplies pressure air to the opposite end of the actuator 11 to make the latter apply a closing force on the lock bolt of the coupling 10. As soon as the latch mechanism is tripped by the tow bar, the air pressure related force on the lock bolt acts to lowering the lock bolt and closing the coupling 10.

The lid 19 is intended to close tightly the maneuver box B so as to protect the valves 14,15 against damage and dirt, and to prevent unintentional movement and shifting of the valves 14,15. Suitably, the lid 19 is provided with a lock device in the form of a friction retainer and/or ears 30a,30b for a pad lock so as to be safely maintained in closed position. The friction retainer comprises a block 31 of a resilient material mounted on the lid 19 and formed with a recess 32 at its outer end for engaging a stud member 33 on the base unit 17.

For each embodiment of the invention, the shut-off valve 15 and the control valve 14 have specific safety positions in which the valves should be maintained when the coupling 10 is not to be operated. In the embodiment illustrated in Figs. 2,3a,3b,3c the shut-off valve 15 has a safety position equal to the closed position, i.e. the handle 27 shall be put on a transverse position relative to the side walls 12a,b. Also the safety position of the control valve 14 means that the handle 28 shall be maintained in a position transverse to the side walls 12a,b. These positions are safety positions for the valves 14,15, i.e. positions that guarantees that the coupling 10 is safely maintained in its closed position.

In order to make sure to the operator that the valves 14,15 are actually put in their safety positions as the operation of the coupling 10 is completed, the lid 19 is provided with a three dimensional structure on the inside such that the lid can not be closed unless the valves 14,15 and their handles 27,28 are put in their respective safety positions.

In the illustrated embodiments of the invention, this three dimensional structure comprises sheet metal profiles which would cross the handles 27,28 if the valves 14,15 are not in their correct position.

In the example shown in Figs. 3a-c, there is one sheet metal profile 34 extending transversely across the lid 19, which will abut against the handle 27 and prevent closure of the lid 19 if the shut-off valve 15 is left in open position. The profile 34 together with the end wall 13b will also interfere with the handle 28 of the control valve 14 and thereby hinder the lid 19 from being shut if the valve 14 is not in its safety position and/or the handle 28 is not folded. When in proper position and with the handle 28 folded the handle 28 will be received in a space 35 between the profile 34 and the retainer block 31, thereby being prevented from being unintentionally shifted to any other position.

A second X-shaped sheet metal profile 36 is mounted between the transverse profile 34 and an end wall of the lid 19, and in the example illustrated in Figs. 3a-c, this X-shaped profile 36 is formed with transversely extending recesses 37,38 to accommodate the shut-off valve handle 27 when occupying the transverse safety position. These recesses 37,38 also lock the handle 27 in the safety position such that any unintentional movement of the shut-off valve 15 is prevented.

In the example illustrated in Fig. 7, the X-shaped profile 36 is provided with recesses 40,41 extending, when the lid 19 is closed, in parallel with the side walls 12a,b of the base unit 17. These recesses 40,41 are arranged to accommodate and lock the handle 27 in the safety position of that example, namely in parallel with the side walls 12a,b of the base unit 17.

As the coupling 10 has been operated via the valves 14,15 to connect or disconnect a trailer to the truck the lid 19 is closed and locked, either by the friction retainer 31 only or by a pad lock engaging the ears 30a,30b. Thereby, the valves 14,15 are protected not only from damage and dirt but also from unauthorised or unintentional shifting.

As described above, the maneuver box B according to the invention is specifically designed to match the shapes and locations of the control devices fitted in a particular application, and the invention is not limited to the shown and described examples but can be freely varied within the scope of the claims. Accordingly, the invention is not limited to the use of a pneumatic valves. Alternatively, the maneuver box may be as well used for hydraulic or electric control devices.

## Claims

1. Maneuver box including one or more control devices (14,15) for communication with at least one remotely located power actuator (11), comprising a base unit (17) rigidly for attachment to a larger structure (18) and supporting rigidly said one or more control devices (14,15), and lid (19) pivotally hinged on said base unit (17) for movement between an open position and a closed position covering and protecting said control devices (14,15), said control devices (14,15) comprise handles (27,28) accessible in said open position of said lid (19) for manual shifting of each one of said control devices (14,15) between two or more operating positions, wherein one of said operating positions is a safety position,
**characterized in that** said lid (19) is formed with an internal three-dimensional structure (34,36) having a configuration adapted to receive said handles (27,28) and enable closure of said lid (19) when each one of said handles (27, 28) occupies its safety position only.

2. Maneuver box according to claim 1, wherein said three-dimensional structure (33,36) comprises one or more wall elements (34,36) disposed on the inside of said lid (19) and shaped to form recesses (35,37,38,40,41) for receiving said handles (27,28).

3. Maneuver box according to claim 1 or 2, wherein said recesses (35,37,38,40,41) are arranged to lock said handles (27,28) in said safety positions.

4. Maneuver box according to anyone of claims 1-3, wherein at least one of said handles (28) comprises a foldable lever (29) arranged to extend outside said base unit (17) when unfolded.

5. Arrangement including a maneuver box according to anyone of claims 1-4 and said power actuator (11) which is operated, said control devices (14,15) comprising a pressure air supply valve (15) and a directional valve (14) both arranged to control the pressure air communication with said power actuator (11).

6. Maneuver box according to anyone of claims 1-5, wherein said base unit (17) and said lid (19) are provided with co-operating lock means (31,32,33; 30a,30b) for maintaining said lid (19) in said closed position.

7. Use of a maneuver box according to anyone of claims 1-6, wherein said power actuator (11) is fitted as an operating equipment of a truck, and said base unit (17) is rigidly secured to a part (18) of the truck chassis.

## Patentansprüche

1. Steuerbox mit einer oder mehreren Steuervorrichtungen (14, 15) zum Zusammenwirken mit mindestens einem entfernt liegenden Stellantrieb (11), mit einem Basisteil (17) zum starren Befestigen an einer größeren Struktur (18) und zum starren Abstützen der mindestens einen Steuervorrichtung (14, 15) und einem an dem Basisteil (17) zur Bewegung zwischen einer offenen und einer geschlossenen Stellung schwenkbar befestigten Deckel (19), in welcher dieser die Steuervorrichtungen (14, 15) abdeckt und schützt, wobei diese Griffelemente (27, 28) aufweisen, die in der offenen Stellung des Deckels (19) zur manuellen Verstellung jeder der Steuervorrichtungen (14, 15) zwischen zwei oder mehreren Betriebsstellungen zugänglich sind, wobei eine der Betriebsstellungen eine Sicherheitsstellung ist,
**dadurch gekennzeichnet, daß** der Deckel (19) mit einer inneren dreidimensionalen Struktur (34, 36) ausgebildet ist, die eine derartige Ausbildung hat, daß sie die Griffelemente (27, 28) aufnimmt und ein Schließen des Deckels (19) nur dann ermöglicht, wenn sich jedes der Griffelemente (27, 28) in seiner Sicherheitsstellung befindet.

2. Steuerbox nach Anspruch 1, bei welcher die dreidimensionale Struktur (33, 36) eine oder mehrere Wandelemente (34, 36) aufweist, die auf der Innenseite des Dekkels (19) angeordnet und derart geformt sind, daß sie Ausnehmungen (35, 37, 38, 40, 41) zum Aufnehmen der Griffelemente (27, 28) bilden.

3. Steuerbox nach Anspruch 1 oder 2, bei welcher die Griffelemente (27, 28) in den Sicherheitsstellungen durch die Aussparungen (35, 37, 38, 40, 41) arretierbar sind.

4. Steuerbox nach einem der Ansprüche 1 bis 3, bei welcher mindestens eines der Griffelemente (28) einen klappbaren Hebel (29) aufweist, der ausgeklappt aus dem Basisteil (17) ragt.

5. Vorrichtung mit einer Steuerbox nach einem der Ansprüche 1 bis 4 und dem pneumatisch betriebenen Stellantrieb (11), wobei die Steuervorrichtungen (14, 15) ein Ventil (15) zur Druckluftversorgung und ein Richtungsventil (14) aufweisen, die beide zur Regelung der Druckluftübertragung an den Stellantrieb vorgesehen sind.

6. Steuerbox nach einem der Ansprüche 1 bis 5, bei welcher das Basisteil (17) und der Deckel (19) mit zusammenwirkenden Arretiervorrichtungen (31, 32, 33; 30a, 30b) versehen sind, damit der Deckel (19) in der geschlossenen Stellung bleibt.

7. Verwendung einer Steuerbox nach einem der Ansprüche 1 bis 6, wobei das Stellantrieb (11) als eine Betriebseinrichtung eines Lastwagens eingebaut ist und das Basisteil (17) starr mit einem Teil (18) des Fahrgestells des Lastwagens verbunden ist.

## Revendications

1. Boîtier de manoeuvre comprenant un ou plusieurs dispositifs de commande (14, 15) destinés à la communication avec au moins un actionneur électrique à distance (11), comprenant
une unité de base (17) fixée de manière rigide à une structure plus grande (18) et supportant de manière rigide le dispositif ou plusieurs dispositifs de commande (14, 15), et
un couvercle (19) articulé, pouvant pivoter sur l'unité de base (17) pour se déplacer entre une position ouverte et une position fermée, recouvrant et protégeant les dispositifs de commande (14, 15),
les dispositifs de commande (14, 15) comprenant des poignées (27, 28) accessibles dans la position ouverte du couvercle (19) pour le déplacement manuel de chacun des dispositifs de commande (14, 15) entre deux positions de fonctionnement ou plus, l'une des positions de fonctionnement étant une position de sécurité
**caractérisé en ce que**
le couvercle (19) est une structure interne à trois dimensions (34, 36) adaptée à recevoir les poignées (27, 28) et à permettre la fermeture du couvercle (19) uniquement lorsque chacune des poignées (27, 28) occupe sa position de sécurité.

2. Boîtier de manoeuvre selon la revendication 1, dans lequel la structure en trois dimensions (33, 36) comprend un ou plusieurs éléments de paroi (34, 36) situés sur l'intérieur du couvercle (19) et constituant des creux (35, 37, 38, 40, 41) destinés à recevoir les poignées (27, 28).

3. Boîtier de manoeuvre selon la revendication 1 ou 2, dans lequel les creux (35, 37, 38, 40, 41) permettant le verrouillage des poignées (27, 28) dans les positions de sécurité.

4. Boîtier de manoeuvre selon l'une des revendications 1 à 3, dans lequel au moins l'une des poignées (28) comprend un levier pliable (29) qui s'étend en dehors de l'unité de base (17) lorsqu'il est déplié.

5. Agencement comprenant un boîtier de manoeuvre selon l'une des revendications 1 à 4 l'actionneur électrique (11) étant actionné pneumatiquement, les dispositifs de commande (14, 15) comprenant une vanne d'alimentation d'air sous pression (15) et une vanne directionnelle (14) qui contrôlent toutes deux la communication d'air sous pression avec l'actionneur électrique (11).

6. Boîtier de manoeuvre selon l'une des revendications 1 à 5, dans lequel l'unité de base (17) et le couvercle (19) sont dotés de moyens de verrouillage coopérants (31, 32, 33 ; 30a, 30b) destinés à maintenir le couvercle (19) dans la position fermée.

7. Utilisation d'un boîtier de manoeuvre selon l'une des revendications 1 à 6, dans lequel l'actionneur électrique (11) est un équipement d'actionnement d'un camion, l'unité de base (17) étant fixée de manière rigide à une partie (18) du châssis du camion.
